# EUROPEAN PATENT SPECIFICATION

(11) **EP 1 279 102 B1**
(45) Date of publication and mention of the grant of the patent: **14.06.2006**
(21) Application number: 01927326.7
(22) Date of filing: 25.04.2001
(51) Int. Cl.: G06F 13/00

(54) **Gigabit switch on chip architecture**
Architektur für eingebaute Gigabitvermittlung
Architecture pour gigacommutateur sur puce

(30) Priority: 03.05.2000 US 201685 P
(43) Date of publication of application: 29.01.2003
(73) Proprietor: Broadcom Corporation, Irvine, CA 92619-7013 (US)
(72) Inventor: MALALUR, Govind, Fremont, CA 94536 (US); KADAMBI, Shiri, Los Altos, CA 94024 (US); AMBE, Shekhar, San Jose, CA 95117 (US); KALKUNTE, Mohan, Sunnyvale, CA 94087 (US)
(74) Representative: Jehle, Volker Armin
(86) International application number: PCT/US2001/013196
(87) International publication number: WO 2001/084327

(56) References cited:
- WO-A-99/00936
- LEVEL ONE: "Level One(TM) IXP1200 Network Processor" ADVANCE DATASHEET, [Online] September 1999 (1999-09), pages 1-52, XP002187948 Retrieved from the Internet: <URL:http://www.cs.utah.edu/~cs6935/Previo us/s01/netprocs/ixa/ixp1200ad.pdf> [retrieved on 2002-01-21]

## Description

### BACKGROUND OF THE INVENTION

### FIELD OF THE INVENTION

The invention relates to an apparatus for high performance switching in local area communications networks such as token ring, ATM, ethernet, fast ethernet, and gigabit ethernet environments, generally known as LANs. In particular, the invention relates to a new switching architecture in an integrated, modular, single chip solution, which can be implemented on a semiconductor substrate such as a silicon chip.

### DESCRIPTION OF THE RELATED ART

As computer performance has increased in recent years, the demands on computer networks has significantly increased; faster computer processors and higher memory capabilities need networks with high bandwidth capabilities to enable high speed transfer of significant amounts of data. The well-known ethernet technology, which is based upon numerous IEEE ethernet standards, is one example of computer networking technology which has been able to be modified and improved to remain a viable computing technology. A more complete discussion of prior art networking systems can be found, for example, in SWITCHED AND FAST ETHERNET, by Breyer and Riley (Ziff-Davis, 1996), and numerous IEEE publications relating to IEEE 802 standards. Based upon the Open Systems Interconnect (OSI) 7-layer reference model, network capabilities have grown through the development of repeaters, bridges, routers, and, more recently, "switches", which operate with various types of communication media. Thickwire, thinwire, twisted pair, and optical fiber are examples of media which has been used for computer networks. Switches, as they relate to computer networking and to ethernet, are hardware-based devices which control the flow of data packets or cells based upon destination address information which is available in each packet. A properly designed and implemented switch should be capable of receiving a packet and switching the packet to an appropriate output port at what is referred to wirespeed or linespeed, which is the maximum speed capability of the particular network.

Basic ethernet wirespeed is up to 10 megabits per second, and Fast Ethernet is up to 100 megabits per second. The newest ethernet is referred to as gigabit ethernet, and is capable of transmitting data over a network at a rate of up to 1,000 megabits per second. As speed has increased, design constraints and design requirements have become more and more complex with respect to following appropriate design and protocol rules and providing a low cost, commercially viable solution. For example, high speed switching requires high speed memory to provide appropriate buffering of packet data; conventional Dynamic Random Access Memory (DRAM) is relatively slow, and requires hardware-driven refresh. The speed of DRAMs, therefore, as buffer memory in network switching, results in valuable time being lost, and it becomes almost impossible to operate the switch or the network at linespeed.

Furthermore, external CPU involvement should be avoided, since CPU involvement also makes it almost impossible to operate the switch at linespeed. Additionally, as network switches have become more and more complicated with respect to requiring rules tables and memory control, a complex multi-chip solution is necessary which requires logic circuitry, sometimes referred to as glue logic circuitry, to enable the various chips to communicate with each other. Additionally, the means with which the elements communicate with each other can limit the operational speed of the switch if elements are made to wait for those communications.

Referring to the OSI 7-layer reference model discussed previously, the higher layers typically have more information. Various types of products are available for performing switching-related functions at various levels of the OSI model. Hubs or repeaters operate at layer one, and essentially copy and "broadcast" incoming data to a plurality of spokes of the hub. Layer two switching-related devices are typically referred to as multiport bridges, and are capable of bridging two separate networks. Bridges can build a table of forwarding rules based upon which MAC (media access controller) addresses exist on which ports of the bridge, and pass packets which are destined for an address which is located on an opposite side of the bridge. Bridges typically utilize what is known as the "spanning tree" algorithm to eliminate potential data loops; a data loop is a situation wherein a packet endlessly loops in a network looking for a particular address. The spanning tree algorithm defines a protocol for preventing data loops. Layer three switches, sometimes referred to as routers, can forward packets based upon the destination network address. Layer three switches are capable of learning addresses and maintaining tables thereof which correspond to port mappings. Processing speed for layer three switches can be improved by utilizing specialized high performance hardware, and off loading the host CPU so that instruction decisions do not delay packet forwarding. In LEVEL ONE: "Level One(TM) IXP 1200 Network Processor", Rev. 278298-001 of September 1999 is disclosed a Network Processor with a IX Bus Interface Unit that is responsible for servicing fast peripherals, such as MAC-layer devices, on the IX Bus (FIFO Bus). This includes moving data to and from the IXP1200 Network Processor Receive and Transmit FIFOs. The IX Bus provides a 4.2 Gb/s interface to peripheral devices. The IX Bus can be configured as either a 64-bit, bidirectional bus or as two 32-bit, unidirectional buses operating at up to 66 MHz. The IX Bus consists of 64 data pins, 23 control pins, and a clock input pin with a typical operating frequency of 66 MHz. A sideband control bus operating in parallel to the IX Bus, called the ReadyBus, consists of eight additional data pins and five control pins. The ReadyBus is synchronous to the IX Bus clock, but it's operation is controlled by a programmable hardware sequencer. ReadyBus cycles are separate and distinct from IX Bus cycles. There are two basic modes of IX Bus operation, namely firstly a 64-Bit bidirectional mode wherein the entire 64-bit data path is used for reads, or writes to IX Bus devices. The Network Processor will always drive and receive all 64-bits of the IX Bus in this mode. 32-bit. Secondly there exists a unidirectional mode wherein the IX Bus is split into independent 32-bit Transmit and 32-bit Receive data paths. In this mode, the Transmit path is always driven, and the Receive path is always an input.

### SUMMARY OF THE INVENTION

The present invention is directed to a switch-on-chip solution for a network switch, capable of using ethernet, fast ethernet, and gigabit ethernet systems, wherein all of the switching hardware is disposed on a single microchip. The present invention is defined by the appended claims.

The network switch can, in a preferred embodiment, be integrated on a single ASIC chip. The network switch can also, in a preferred embodiment, include a plurality of semiconductor-implemented lookup tables therein, said plurality of lookup tables including address resolution lookup/layer three lookup, rules tables, and VLAN tables.

### BRIEF DESCRIPTION OF THE DRAWINGS

The objects and features of the invention will be more readily understood with reference to the following description and the attached drawings, wherein:

Fig. 1 is a general block diagram of elements of the present invention;

Fig. 2 is block diagram of elements of the switch on chip of the present invention;

Fig. 3 is a data flow diagram of a packet showing the CPS channels;

Fig. 4 illustrates the C-channel arbitration mechanism;

Fig. 5 illustrates the timing of the C-channel;

Fig. 6 illustrates the cell channel format;

Fig. 7 illustrates structure of the protocol channel messages.

Fig. 8 illustrates structure of the side band channel messages.

Fig. 9 illustrates data flow in ingress in the switch of the present invention.

### DETAILED DESCRIPTION OF THE PREFERRED EMBODIMENTS

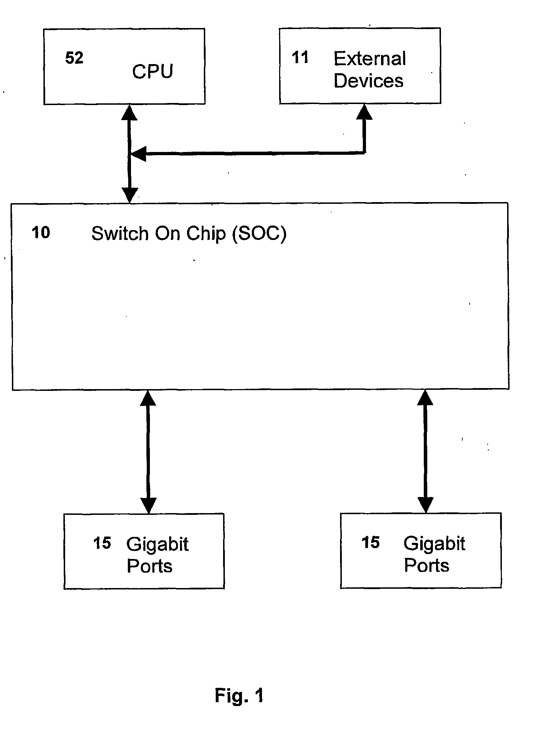

Fig. 1 illustrates a configuration wherein a switch-on-chip (SOC) 10, in accordance with the present invention, is functionally connected to external devices 11, a central processing unit (CPU) 52, and gigabit ethernet ports 15. For the purposes of this embodiment, the gigabit ethernet ports 15, which are high speed ethernet ports, are capable of operating at 1000 Mbps, but are also capable of operating at speeds ranging from 10 Mbps to 100 Mbps. External devices 11 could include other switching devices for expanding switching capabilities, or other devices as may be required by a particular application. CPU 52 can be used as necessary to program SOC 10 with rules which are appropriate to control packet processing. However, once SOC 10 is appropriately programmed or configured, SOC 10 operates, as much as possible, in a free running manner without communicating with CPU 52. Because CPU 52 does not control every aspect of the operation of SOC 10, CPU 52 performance requirements, at least with respect to SOC 10, are fairly low. A less powerful and therefore less expensive CPU 52 can therefore be used when compared to known network switches.

It should be noted that any number of gigabit ethernet ports 15 can be provided. In one embodiment, 8 gigabit ports 15 can be provided. Similarly, additional interconnect links to additional external devices 11 and CPUs 52 may be provided as necessary.

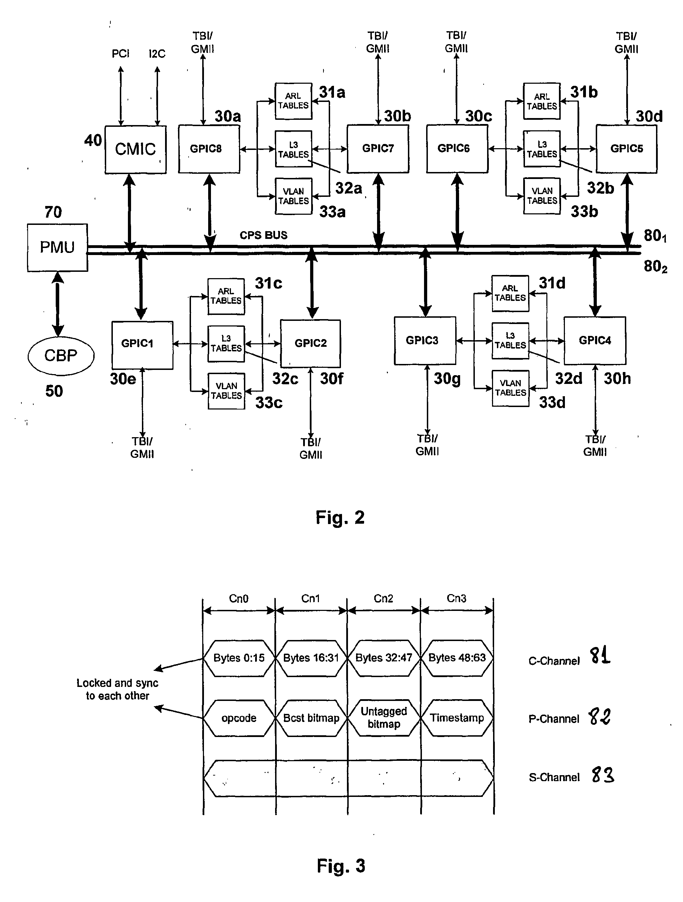

Figure 2 illustrates a more detailed block diagram of the functional elements of SOC 10. As evident from Figure 2 and as noted above, SOC 10 includes a plurality of modular systems on-chip, with each modular system, although being on the same chip, being functionally separate from other modular systems. Therefore, each module can efficiently operate in parallel with other modules, and this configuration enables a significant amount of freedom in updating and re-engineering SOC 10.

SOC 10 includes a plurality of Gigabit Port Interface Controllers (GPIC) 30a, 30b, etc., a CPU Management Interface Controller (CMIC) 40, a Common Buffer Memory Pool (CBP) 50, a Pipelined Memory Management Unit (PMMU) 70 and two system-wide bus structures, each referred to as a CPS channel, 80₁ and 80₂.

Each CPS channel, 80₁ or 80₂, comprises C channel 81, P channel 82, and S channel 83. The CPS channel is also referred to as the Cell Protocol Sideband Channel, and each channel is a 17 Gbps channel which glues or interconnects the various modules together. Although not illustrated in Figure 2, other high speed interconnects can be provided, such as an extendible high speed interconnect. This interconnect can be in the form of an interconnect port interface controller, which is capable of interfacing CPS channels 80₁ and 80₂ to external devices 11 through an extendible high speed interconnect link.

As will be discussed below, each GPIC 30a - 30h, generally referred to as GPIC 30, are closely interrelated with appropriate address resolution logic and layer three switching tables 32a, 32b, 32c, 32d, rules tables 31 a, 31 b, 31 c, 31 d, and VLAN tables 33a, 33b, 33c, 33d. These tables will be generally referred to as 31, 32, and 33, respectively.

As is known in the art, auto-negotiation is an aspect of fast ethernet, wherein the network is capable of negotiating a highest communication speed between a source and a destination based on the capabilities of the respective devices. The communication speed can vary, as noted previously, between 10 Mbps, 100 Mbps and 1000 Mbps; auto negotiation capability, therefore, is built directly into each GPIC module. The address resolution logic (ARL) and layer three tables (ARL/L3) 21a, 21b, 21 c, rules table 22a, 22b, 22c, and VLAN tables 23a, 23b, and 23c are configured to be part of or interface with the associated GPIC in an efficient and expedient manner, also to support wirespeed packet flow.

Each GPIC 30 supports one gigabit ethernet port and has separate ingress and egress functions. Additionally, each GPIC port interfaces to the network medium utilizing a gigabit media independent interface (GMII). On the ingress side, self-initiated and CPU-initiated learning of level 2 address information can occur. Address resolution logic (ARL) is utilized to assist in this task. Address aging is built in as a feature, in order to eliminate the storage of address information which is no longer valid or useful. Layer two lookups, Layer three lookups and filtering occur simultaneously to achieve a high level of performance. On the egress side, the GPIC is capable of supporting packet polling based either as an egress management or class of service (COS) function. Rerouting/scheduling of packets to be transmitted can occur, as well as head-of-line (HOL) blocking notification, packet aging, cell reassembly, and other functions associated with the port interface.

CMIC 40 acts as a gateway between the SOC 10 and the host CPU. The communication can be, for example, along a PCI bus, or other acceptable communications bus. CMIC 40 can provide sequential direct mapped accesses between the host CPU 52 and the SOC 10. CPU 52, through the CMIC 40, will be able to access numerous resources on SOC 10, including MIB counters, programmable registers, status and control registers, configuration registers, ARL tables, port-based VLAN tables, IEEE 802.1 q VLAN tables, layer three tables, rules tables, CBP address and data memory, as well as GBP address and data memory. Optionally, the CMIC 40 can include DMA support, DMA chaining and scatter-gather, as well as master and target PC164.

Common buffer memory pool or CBP 50 can be considered to be the on-chip data memory. In one embodiment of the invention, the CBP 50 is high speed SRAM memory, to maximize performance and minimize hardware overhead requirements. The CBP can have a size of, for example, 720 kilobytes running at 132 MHz. Packets stored in the CBP 50 are typically stored as cells, rather than packets.

As shown in Fig. 3, each CPS channel, 80₁ or 80₂, is actually two separate channels, referred to as the C-channel, the P-channel, and a shared S-channel. The C-channel is 128 bits wide, and runs at 132 MHz. Packet transfers between ports occur on the C-channel. Since this channel is used solely for data transfer, there is no overhead associated with its use. The P-channel or protocol channel is synchronous or locked with the C-channel. During cell transfers, the message header is sent via the P-channel by the PMMU. The P-channel is 32 bits wide, and runs at 132 MHz.

The S or sideband channel runs at 132 MHz, and is 32 bits wide. The S-channel is used for functions such as for conveying Port Link Status, receive port full, port statistics, ARL table synchronization, memory and register access to CPU and other CPU management functions, and global memory full and common memory full notification.

The present invention, as discussed above, has a dual CP bus to enable a non-blocking solution. One bus is used for communication from a GPIC to the memory and the other bus is used for sending packets from the memory to the GPIC's egress port. In prior art switches having a single bus, and serving the flow of packets in both directions, a "turnaround" clock cycle is necessary between sending and receiving for each GPIC. Through the use of two buses, the actual throughput is doubled, as compared to a single bus operating at the same speed, since the receiving and the sending are served by separate buses and an additional saving in clock cycles is obtained because the buses no longer require a "turnaround." The elimination of the turnaround through the dual bus structure contributes an extra 20% increase above the doubled throughput.

A proper understanding of the operation of SOC 10 requires a proper understanding of the operation of CPS channel 80. Referring to Fig. 3, it can be seen that in SOC 10, on the ingress, packets are sliced by a GPIC 30 into 64-byte cells. In the SOC, incoming packets are sliced into cells which are 64 bytes long as discussed above, and the cells are further divided into four separate 16 byte cell blocks Cn0...Cn3. Locked with the C-channel is the P-channel, which locks the opcode in synchronization with Cn0. A port bit map is inserted into the P-channel during the phase Cn1. The untagged bit map is inserted into the P-channel during phase Cn2, and a time stamp is placed on the P-channel in Cn3. Independent from occurrences on the C and P-channel, the S-channel is used as a sideband, and is therefore decoupled from activities on the C and P-channel. Cell or C-Channel

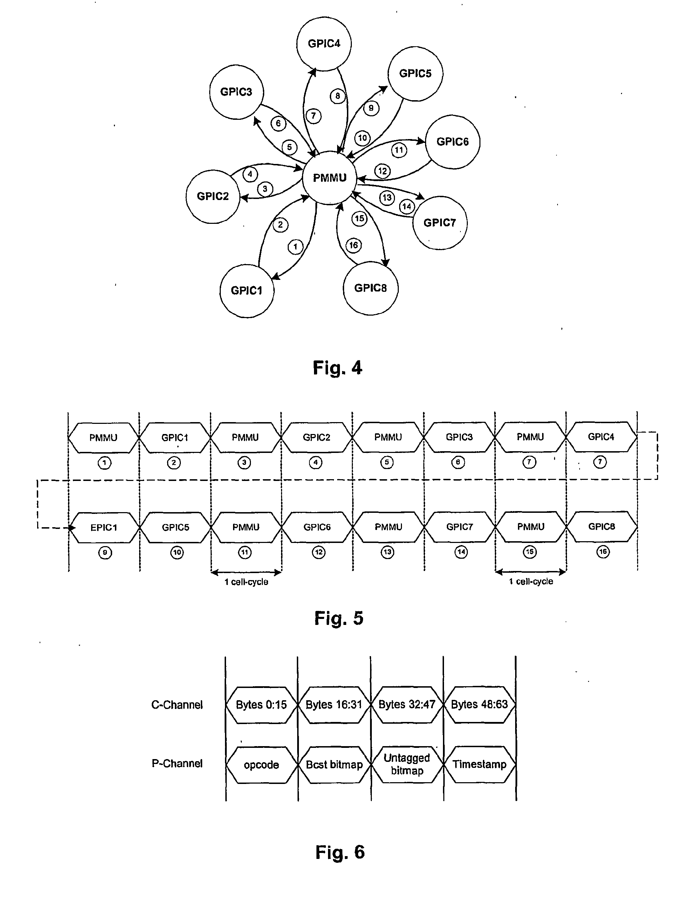

Arbitration for the CPS channel occurs out of band. Every module (GPIC, etc.) monitors the channel, and matching destination ports respond to appropriate transactions. C-channel arbitration is a demand priority round robin arbitration mechanism. If no requests are active, however, the default module, which can be selected during the configuration of SOC 10, can park on the channel and have complete access thereto. If all requests are active, the configuration of SOC 10 is such that the PMMU is granted access every other cell cycle, and the GPICs 30 share equal access to the C-channel on a round robin basis. Figs. 4 and 5 illustrate a C-channel arbitration mechanism wherein section A is the PMMU, and section B consists of eight GPICs. The sections alternate access, and since the PMMU is the only module in section A, it gains access every other cycle. The modules in section B, as noted previously, obtain access on a round robin basis. Protocol or P-Channel

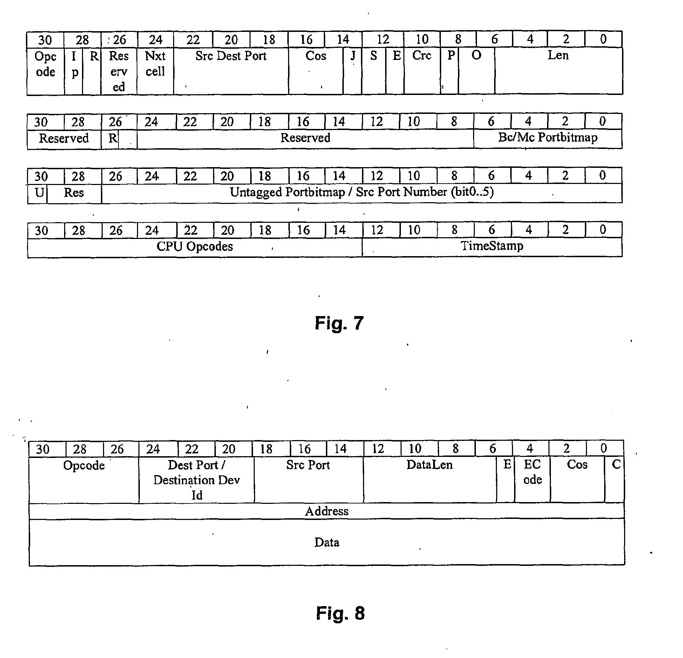

Referring once again to the protocol or P-channel and Fig. 7, a plurality of messages can be placed on the P-channel in order to properly direct flow of data flowing on the C-channel. Since P-channel 82 is 32 bits wide, and a message typically requires 128 bits, four smaller 32 bit messages are put together in order to form a complete P-channel message. The following list identifies the fields and function and the various bit counts of the 128 bit message on the P-channel:
**Opcode -** 2 bits long - Identifies the type of message present on the C channel 81;
**IP Bit** - 1 bit long - This bit is set to indicate that the packet is an IP switched packet;
**Next Cell -** 2 bits long - A series of values to identify the valid bytes in the corresponding cell on the C channel 81;
**SRC DEST Port -** 6 bits long - Defines the port number which sends the message or receives the message, with the interpretation of the source or destination depending upon Opcode;
**Cos -** 3 bits long - Defines class of service for the current packet being processed;
**J -** 1 bit long - Describes whether the current packet is a jumbo packet;
**S -** 1 bit long - Indicates whether the current cell is the first cell of the packet;
**E -** 1 bit long - Indicates whether the current cell is the last cell of the packet;
**CRC -** 2 bits long - Indicates whether a Cyclical Redundancy Check (CRC) value should be appended to the packet and whether a CRC value should be regenerated;
**P Bit -** 1 bit long - Determines whether MMU should Purge the entire packet;
**Len -** 7 bytes - Identifies the valid number of bytes in current transfer;
**O -** 2 bits - Defines an optimization for processing by the CPU 52; and
**Bc/Mc Bitmap -** 28 bits - Defines the broadcast or multicast bitmap. Identifies egress ports to which the packet should be set, regarding multicast and broadcast messages.
**Untag Bits/Source Port -** 28/5 bits long - Depending upon Opcode, the packet is transferred from Port to MMU, and this field is interpreted as the untagged bit map. A different Opcode selection indicates that the packet is being transferred from MMU to egress port, and the last six bits of this field is interpreted as the Source Port field. The untagged bits identifies the egress ports which will strip the tag header, and the source port bits identifies the port number upon which the packet has entered the switch;
U **Bit -** 1 bit long - For a particular Opcode selection (0x01, this bit being set indicates that the packet should leave the port as Untagged; in this case, tag stripping is performed by the appropriate MAC;
**Time Stamp -** 14 bits - The system puts a time stamp in this field when the packet arrives, with a granularity of 1 µsec;
**CPU Opcode -** 18 bits long - These bits are set if the packet is being sent to the CPU for any reason. Opcodes are defined based upon filter match, learn bits being set, routing bits, destination lookup failure (DLF), station movement, etc.

The opcode field of the P-channel message defines the type of message currently being sent. While the opcode is currently shown as having a width of 2 bits, the opcode field can be widened as desired to account for new types of messages as may be defined in the future. Graphically, however, the P-channel message type defined above is shown in Fig. 7.

An early termination message is used to indicate to PMMU that the current packet is to be terminated. During operation, as discussed in more detail below, the status bit (S) field in the message is set to indicate the desire to purge the current packet from memory. Also in response to the status bit all applicable egress ports would purge the current packet prior to transmission.

The Src Dest Port field of the P-channel message, as stated above, define the destination and source port addresses, respectively. Each field is 6 bits wide and therefore allows for the addressing of sixty-four ports.

The CRC field of the message is two bits wide and defines CRC actions. Bit 0 of the field provides an indication whether the associated egress port should append a CRC to the current packet. An egress port would append a CRC to the current packet when bit 0 of the CRC field is set to a logical one. Bit 1 of the CRC field provides an indication whether the associated egress port should regenerate a CRC for the current packet. An egress port would regenerate a CRC when bit 1 of the CRC field is set to a logical one. The CRC field is only valid for the last cell transmitted as defined by the E bit field of P-channel message set to a logical one.

As with the CRC field, the status bit field (st), the Len field, and the Cell Count field of the message are only valid for the last cell of a packet being transmitted as defined by the E bit field of the message.

Last, the time stamp field of the message has a resolution of 1 µs and is valid only for the first cell of the packet defined by the S bit field of the message. A cell is defined as the first cell of a received packet when the S bit field of the message is set to a logical one value.

As is described in more detail below, the C channel 81 and the P channel 82 making up the CPS channels 80₁ and 80₂, are synchronously tied together such that data on C channel 81 is transmitted over the CPS channel 80 while a corresponding P channel message is simultaneously transmitted. S-Channel or Sideband Channel

The S channel 83 is a 32-bit wide channel which provides a separate communication path within the SOC 10. The S channel 83 is used for management by CPU 52, SOC 10 internal flow control, and SOC 10 inter-module messaging. The S channel 83 is a sideband channel of the CPS channel 80, and is electrically and physically isolated from the C channel 81 and the P channel 82. It is important to note that since the S channel is separate and distinct from the C channel 81 and the P channel 82 of each set of channels, operation of the S channel 83 can continue without performance degradation related to the C channel 81 and P channel 82 operation. Conversely, since the C channel is not used for the transmission of system messages, but rather only data, there is no overhead associated with the C channel 81 and, thus, the C channel 81 is able to free-run as needed to handle incoming and outgoing packet information.

The S channel 83 of CPS channel 80 provides a system wide communication path for transmitting system messages, for example, providing the CPU 52 with access to the control structure of the SOC 10. System messages include port status information, including port link status, receive port full, and port statistics, ARL table 22 synchronization, CPU 52 access to the CBP 50 memory buffer and SOC 10 control registers, and memory full notification corresponding to CBP 50.

Fig. 8 illustrates a message format for an S channel message on S channel 83. The message is formed of four 32-bit words; the bits of the fields of the words are defined as follows:
**Opcode -** 6 bits long - Identifies the type of message present on the S channel;
**Dest Port -** 6 bits long - Defines the port number to which the current S channel message is addressed;
**Src Port** -6 bits long - Defines the port number of which the current S channel message originated;
**COS -** 3 bits long - Defines the class of service associated with the current S channel message; and
**C bit -** 1 bit long - Logically defines whether the current S channel message is intended for the CPU 52.
**Error Code -** 2 bits long - Defines a valid error when the **E bit** is set;
**DataLen -** 7 bits long - Defines the total number of data bytes in the **Data** field;
**E bit -** 1 bit long - Logically indicates whether an error has occurred in the execution of the current command as defined by **opcode;**
**Address -** 32 bits long - Defines the memory address associated with the current command as defined in **opcode;**
**Data -** 0-127 bits long - Contains the data associated with the current opcode.

With the configuration of CPS channel 80 as explained above, the decoupling of the S channel from the C channel and the P channel is such that the bandwidth on the C channel can be preserved for cell transfer, and that overloading of the C channel does not affect communications on the sideband channel.

The configuration of the SOC 10 supports gigabit ports, and extendible interconnect links as discussed above. The SOC configuration can also be "stacked", thereby enabling significant port expansion capability. Once data packets have been received by SOC 10, sliced into cells, and placed on CPS channel 80, stacked SOC modules can interface with the CPS channels and monitor the channels, and extract appropriate information as necessary. As will be discussed below, a significant amount of concurrent lookups and filtering occurs as the packet comes in to ingress submodule the GPIC 30, with respect to layer two and layer three lookups, and fast filtering.

It should be noted that each GPIC 30 has an ingress submodule and egress submodule, which provide port specific ingress and egress functions. All incoming packet processing occurs in ingress submodule, and features such as the fast filtering processor, layer two (L2) and layer three (L3) lookups, layer two learning, both self-initiated and CPU 52 initiated, layer two table management, layer two switching, packet slicing, and channel dispatching occur in ingress submodule. After lookups, fast filter processing, and slicing into cells, as noted above and as will be discussed below, the packet is placed from ingress submodule into dispatch unit, and then placed onto CPS channel 80₁ and memory management is handled by PMMU 70. A number of ingress buffers are provided in dispatch unit to ensure proper handling of the packets/cells. Once the cells or cellularized packets are placed onto the CPS channel 80₁, the ingress submodule is finished with the packet. The ingress is not involved with dynamic memory allocation, or the specific path the cells will take toward the destination.

Egress submodule monitors CPS channel 80₂ and continuously looks for cells destined for a port of that particular GPIC 30. When the PMMU 70 receives a signal that an egress associated with a destination of a packet in memory is ready to receive cells, PMMU 70 pulls the cells associated with the packet out of the memory, as will be discussed below, and places the cells on CPS channel 80₂, destined for the appropriate egress submodule. A FIFO in the egress submodule continuously sends a signal onto the CPS channel 80₂ that it is ready to receive packets, when there is room in the FIFO for packets or cells to be received. As noted previously, the CPS channels 80₁ and 80₂ are configured to handle cells, but cells of a particular packet are always handled together to avoid corrupting of packets.

In order to overcome data flow degradation problems associated with overhead usage of the C channel 81, all L2 learning and L2 table management is achieved through the use of the S channel 83. L2 self-initiated learning is achieved by deciphering the source address of a station at a given ingress port utilizing the packet's associated address. Once the identity of the station at the ingress port is determined, the ARL/L3 tables, 31 and 32, are updated to reflect the station identification. The ARL/L3 tables 31 & 32 of the GPICs 30 are updated to reflect the newly acquired station identification in a synchronizing step.

Table management may also be achieved through the use of the CPU 52. CPU 52, via the CMIC 40, can provide the SOC 10 with software functions which result in the designation of the identification of a station at a given port. As discussed above, it is undesirable for the CPU 52 to access the packet information in its entirety since this would lead to performance degradation. Rather, the SOC 10 is programmed by the CPU 52 with identification information concerning the station. The SOC 10 can maintain real-time data flow since the table data communication between the CPU 52 and the SOC 10 occurs exclusively on the S channel 83. While the SOC 10 can provide the CPU 52 with direct packet information via the C channel 81, such a system setup is undesirable for the reasons set forth above. As stated above, as an ingress function an address resolution lookup is performed by examining the ARL table 31. If the packet is addressed to one of the layer three (L3) switches of the SOC 10, then the ingress submodule performs the L3 and default table lookup. Once the destination port has been determined, the GPIC 30 sets a ready flag in the dispatch unit which then arbitrates for C channel 81.

The C channel 81 arbitration scheme, as discussed previously and as illustrated in Figs. 4 and 5, is Demand Priority Round-Robin. Each I/O module, GPIC 30, and CMIC 40, along with the PMMU 70, can initiate a request for C channel access. If no requests exist at any one given time, a default module established with a high priority gets complete access to the C channel 81. If any one single I/O module or the PMMU 70 requests C channel 81 access, that single module gains access to the C channel 81 on-demand.

If GPIC modules 30 and CMIC 40 simultaneously request C channel access, then access is granted in round-robin fashion. For a given arbitration time period each of the I/O modules would be provided access to the C channel 81. For example, each GPIC module 30 would be granted access, followed by the CMIC 40. After every arbitration time period the next I/O module with a valid request would be given access to the C channel 81. This pattern would continue as long as each of the I/O modules provide an active C channel 81 access request.

If all the I/O modules, including the PMMU 70, request C channel 81 access, the PMMU 70 is granted access as shown in Fig. 5 since the PMMU provides a critical data path for all modules on the switch. Upon gaining access to the channel 81, the dispatch unit proceeds in passing the received packet, one cell at a time, to C channel 81.

Referring again to Fig. 3, the individual C, P, and S channels of the CPS channels 80₁ and 80₂ are shown. Once the dispatch unit has been given permission to access the CPS channel 80₁, during the first time period Cn0, the dispatch unit places the first 16 bytes of the first cell of the received packet on the C channel 81₁. Concurrently, the dispatch unit places the first P channel message corresponding to the currently transmitted cell. As stated above, the first P channel message defines, among other things, the message type. Therefore, this example is such that the first P channel message would define the current cell as being a unicast type message to be directed to the destination egress port.

During the second clock cycle Cn1, the second 16 bytes (16:31) of the currently transmitted data cell are placed on the C channel 81. Likewise, during the second clock cycle Cn1, the Bc/Mc Port Bitmap is placed on the P channel 82.

As indicated by the hatching of the S channel 83 data during the time periods Cn0 to Cn3 in Fig. 3, the operation of the S channel 83 is decoupled from the operation of the C channel 81 and the P channel 82. For example, the CPU 52, via the CMIC 40, can pass system level messages to non-active modules while an active module passes cells on the C channel 81. As previously stated, this is an important aspect of the SOC 10 since the S channel operation allows parallel task processing, permitting the transmission of cell data on the C channel 81 in real-time. Once the first cell 112a of the incoming packet 112 is placed on the CPS channel 80 the PMMU 70 determines whether the cell is to be transmitted to an egress port 21 local to the SOC 10.

If the PMMU 70 determines that the current cell on the C channel 81 is destined for an egress port of the SOC 10, the PMMU 70 takes control of the cell data flow.

When PMMU 70 determines that cell is destined for an appropriate egress port on SOC 10, PMMU 70 controls the cell flow from CPS channel 80 to CBP 50. As the data packet is received at PMMU 70 from CPS 80, a manager determines whether or not sufficient memory is available in CBP 50 for the data packet. A free address pool (not shown) can provide storage for at least two cell pointers per egress manager, per class of service. If sufficient memory is available in CBP 50 for storage and identification of the incoming data packet, the manager places the data cell information on CPS channel 80. The data cell information is provided by the manger to CBP 50 at the assigned address. As new cells are received by PMMU 70, the manager assigns cell pointers. This corresponding cell pointer is stored as a two byte or 16 bit value NC_header, in an appropriate place on a control message, with the initial pointer to the corresponding egress manager, and successive cell pointers as part of each cell header, a linked list of memory pointers is formed which defines packet, when the packet is transmitted via the appropriate egress port.

Once the packet is fully written into CBP 50, a corresponding CBP Packet Identifier (CPID) is provided to the appropriate egress manager; where this CPID points to the memory location of initial cell. The CPID for the data packet is then used when the data packet is sent to the destination egress port. In actuality, the manager maintains two buffers containing a CBP cell pointer, with admission to the CBP being based upon a number of factors.

When a packet has been received and stored in CBP 50, a CPID is provided to the associated egress manager. The total number of data cells associated with the data packet is stored in a budget register (not shown). As more data packets are received and designated to be sent to the same egress manager, the value of the budget register corresponding to the associated egress manager is incremented by the number of data cells of the new data cells received. The budget register therefore dynamically represents the total number of cells designated to be sent by any specific egress port on a GPIC 30. The PMMU manager controls the inflow of additional data packets by comparing the budget register to a high watermark register value or a low watermark register value, for the same egress.

When the value of the budget register exceeds the high watermark value, the associated ingress port is disabled. Similarly, when data cells of an egress manager are sent via the egress port, and the corresponding budget register decreases to a value below the low watermark value, the ingress port is once again enabled. When egress manager initiates the transmission of packet, the egress manager notifies the manager, which then decrements the budget register value by the number of data cells which are transmitted. The specific high watermark values and low watermark values can be programmed by the station via CPU 52. This gives the station control over the data flow of any port on any GPIC 30.

When the packet comes in from the ingress port the decision to accept the frame for learning and forwarding is done based on several ingress rules. These ingress rules are based on the Protocols and Filtering Mechanisms supported in the switch. The protocols which decide these rules are 802.1 d (Spanning Tree Protocol), 802.1 p and 802.1 q. Extensive Filtering Mechanism with inclusive and exclusive Filters is supported. These Filters are applied on the ingress side and depending on the outcome different actions are taken. Some of the actions may involve changing the 802.1 p priority in the packet Tag header, changing the Type Of Service (TOS) Precedence field in the IP Header or changing the egress port.

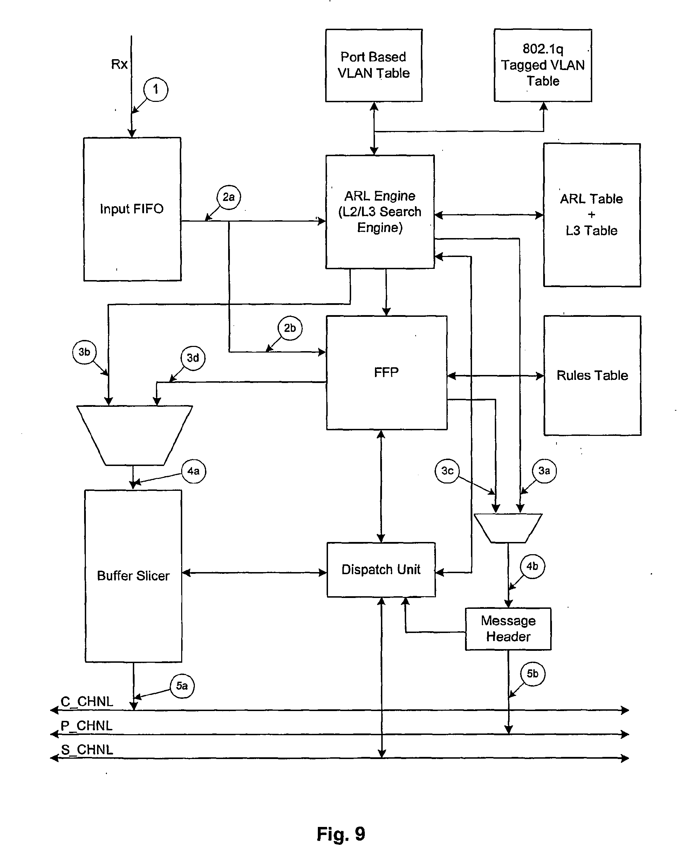

The data flow on the ingress into the switch will now be discussed with respect to Fig. 9. As the packet comes in, it is put in the Input FIFO, as shown in step 1. An Address Resolution Request is sent to the ARL Engine as soon as first 16 bytes arrive in the Input FIFO (2a). If the packet has 802.1q Tag then the ARL Engine does the lookup based on 802.1q Tag in the TAG BASED VLAN TABLE. If the packet does not contain 802.1 q Tag then ARL Engine gets the VLAN based on the ingress port from the PORT BASED VLAN TABLE. Once the VLAN is identified for the incoming packet, ARL Engine does the ARL Table search based on Source Mac Address and Destination Mac Address. The key used in this search is Mac Address + VLAN Id. If the result of the ARL search is one of the L3 Interface Mac Address, then it does the L3 search to get the Route Entry. If an L3 search is successful then it modifies the packet as per Packet Routing Rules.

At step 2b, a Filtering Request is sent to Fast Filtering Processor (FFP) as soon as first 64 bytes arrive in the Input FIFO. The outcome of the ARL search, step 3a, is the egress port/ ports, the Class Of Service (COS), Untagged Port Bitmap and also in step 3b the modified packet in terms of Tag Header, or L3 header and L2 Header as per Routing Rules. The FFP applies all the configured Filters and results are obtained from the RULES TABLE.

The outcome of the Filtering Logic, at 3c, decides if the packet has to be discarded, sent to the CPU or, in 3d, the packet has to be modified in terms of 802.1q header or the TOS Precedence field in the IP Header. If the TOS Precedence field is modified in the IP Header then the IP Checksum needs to be recalculated and modified in the IP Header.

The outcome of FFP and ARL Engine, in 4a, are applied to modify the packet in the Buffer Slicer. Based on the outcome of ARL Engine and FFP, 4b, the Message Header is formed ready to go on the Protocol Channel. The Dispatch Unit sends the modified packet over the cell Channel, in 5a, and at the same time, in 5b, sends the control Message on the Protocol Channel. The Control Message contains the information such as source port number, COS, Flags, Time Stamp and the bitmap of all the ports on which the packet should go out and Untagged Bitmap.

The above-discussed configuration of the invention is, in a preferred embodiment, embodied on a semiconductor substrate, such as silicon, with appropriate semiconductor manufacturing techniques and based upon a circuit layout which would, based upon the embodiments discussed above, be apparent to those skilled in the art. A person of skill in the art with respect to semiconductor design and manufacturing would be able to implement the various modules, interfaces, and tables, buffers, etc. of the present invention onto a single semiconductor substrate, based upon the architectural description discussed above. It would also be within the scope of the invention to implement the disclosed elements of the invention in discrete electronic components, thereby taking advantage of the functional aspects of the invention without maximizing the advantages through the use of a single semiconductor substrate.

Although the invention has been described based upon these preferred embodiments, it would be apparent to those of skilled in the art that certain modifications, variations, and alternative constructions would be apparent, while remaining within the scope of the invention. In order to determine the metes and bounds of the Invention, therefore, reference should be made to the appended claims.

## Claims

1. A network switch (10) for network communications, said network switch (10) comprising:
a first data port interface, said first data port interface supporting at least one data port (15) transmitting and receiving data;
a second data port interface, said second data port interface supporting at least one data port (15) transmitting and receiving data;
a CPU interface, said CPU interface configured to communicate with a CPU (52);
a common memory (50), said common memory (50) communicating with said first data port interface and said second data port interface;
a memory management unit (70), said management unit (70) for communicating data from said first data port interface and said second data port interface and said common memory (50); and
at least two communication means communicating data and messaging information between said first data port interface, said second data port interface, and said memory management unit (70),
wherein one communication means of at least two communication means provides communication from said first and second data port interfaces to said memory management unit (70) and another communication means of at least two communication means provides communication from said memory management unit (70) to said first and second data port interfaces,
**characterized in that**
each communication means is a set of communication channels (80₁, 80₂) with each of said communication channels (81,82,83) communicating data and messaging information between said first data port interface, said second data port interface, and said memory management unit (70), and
wherein each set of said at least two sets of communication channels (80₁,80₂) comprises three communication channels (81,82,83), and
wherein said three communication channels (81,82,83) include a first channel (81) for communicating cell data between data ports (15) of the first data port interface, data ports (15) of the second data port interface, and the common memory (50), a second channel (82), synchronously locked with the first channel (81), for communicating message information corresponding to the cell data on the first channel (81), and a third channel (83), shared between the sets of communication channels (80₁,80₂), independent from said first (81) and said second channel (82), for communicating sideband message information.

2. A network switch (10) as recited in claim 1, wherein at least one of said first and second data port interfaces is a gigabit data port interface.

3. A network switch (10) as recited in claim 1, wherein said first data port interface, said second data port interface, said CPU interface, said common memory (50), said memory management unit (70), and said at least two sets of communication channels (80₁,80₂) are integrated on a single application specific integrated circuit ASIC chip.

4. A network switch (10) as recited in claim 1, wherein said first data port interface, said second data port interface, said CPU interface, said common memory, said management memory unit, and said at least two sets of communication channels are configured to perform layer two or layer three switching at wirespeed.

5. A network switch (10) as recited in claim 1, wherein said CPU interface is configured to provide communication between a remote CPU and the at least two sets of communication channels (80₁,80₂), wherein said remote CPU can program operations of the memory management unit (70) while one of the first and second data port interfaces are receiving or transmitting data.

6. A network switch (10) as recited in claim 6, wherein said CPU interface is configured to provide communication between the remote CPU and a sideband channel (83) of the at least two sets of communication channels (80₁,80₂).

7. A network switch (10) as recited in claim 1, said network switch (10) including a plurality of semiconductor-implemented lookup tables therein, said plurality of lookup tables including address resolution lookup/layer three lookup, rules tables (31a-31d, 32a-32d), and VLAN tables (33a-33d).

8. A network switch (10) as recited in claim 7, wherein said first data port interface communicates table information with said second data port interface, such that incoming address information can be updated at a plurality of data port interfaces while the information is received at one data port interface.

9. A network switch (10) as recited in claim 1, wherein said first data port interface includes an auto-negotiating unit for negotiating a maximum communication speed between a source data port (15) and a destination data port (15).

10. A network switch (10) as recited in claim 7, wherein said first data port interface and said second data port interface share a common address lookup/layer three table, and a common VLAN table, and
wherein each of the first data port interface and the second data port interface has a unique rules table associated therewith.

11. A method of handling data packets in a network switch (10), said method comprising the steps of:
receiving at a data port (15) an incoming packet;
resolving a destination, address of said incoming data packet;
discarding, forwarding, or modifying the packet based upon the resolving step;
placing at least a portion of said data packet on one of at least two communication means, when the packet is to be forwarded;
receiving at said data port (15) a section of another packet on another of said at least two communication means from a common memory; and
forwarding said another packet from said data port;
**characterized in that**
said communication means is a set of communication channels (80₁,80₂),
wherein each set of said at least two sets of communication channels (80₁,80₂) comprises three communication channels (81,82,83) and
wherein said communication channels (81,82,83) are separate from each other
wherein said step of placing at least a portion of said data packets on one of the at least two sets of communication channels (80₁,80₂) includes placing at least a portion of said data packets on a first communication channel (81) of said one set of communication channels (80₁,80₂) and further includes placing an associated control message on a second communication channel (82) of said one set of communication channels (80₁, 80₂), and
said step of receiving at said data port a section of another data packet on the another of said at least two sets of communication channels (80₁,80₂) includes receiving at said data port a section of another data packet from the common memory (50) on a third communication channel (83) being a channel of the another of the at least two sets of communication channels (80₁,80₂) and further comprises receiving an associated control message from the common memory (50) on a fourth communication channel being a channel of the another of the at least two sets of communication channels (80₁,80₂), and
wherein the first, second, third and fourth communication channels (81,82,83) are separate but the first and the second (81,82) are synchronized with each other and the third and the fourth are synchronized with each other, and
further comprising sending and receiving, by said data port (15), sideband message information on a fifth communication channel shared between the sets of communication channels (80₁,80₂).

12. A method as recited in claim 11, wherein said network switch has a plurality of data ports (15), and wherein said step of resolving a destination address of said incoming data packet further comprises updating address information used in forwarding data packets at said plurality of data ports (15) while the address information is received at one data port (15) of said plurality of data ports (15).

## Patentansprüche

1. Netzwerk-Switch (10) zur Netzwerkkommunikation, wobei der Netzwerk-Switch (10) umfasst:
eine erste Datenport-Schnittstelle, wobei die erste Datenport-Schnittstelle wenigstens einen Datenport (15) unterstützt, der Daten sendet und empfängt,
eine zweite Datenport-Schnittstelle, wobei die zweite Datenport-Schnittstelle wenigstens einen Datenport (15) unterstützt, der Daten sendet und empfängt,
eine CPU-Schnittstelle, wobei die CPU-Schnittstelle dafür konfiguriert ist, mit einer CPU (52) zu kommunizieren,
einen gemeinsamen Speicher (50), wobei der gemeinsame Speicher (50) mit der ersten Datenport-Schnittstelle und der zweiten Datenport-Schnittstelle kommuniziert,
eine Speicher-Managementeinheit (70), wobei die Managementeinheit (70) zur Übertragung von Daten von der ersten Datenport-Schnittstelle und der zweiten Datenport-Schnittstelle sowie dem gemeinsamen Speicher (50) ausgelegt ist, und
wenigstens zwei Kommunikationseinrichtungen, die zwischen der ersten Datenport-Schnittstelle, der zweiten Datenport-Schnittstelle und der Speicher-Managementeinheit (70) Daten übertragen und Informationen übermitteln,
wobei eine Kommunikationseinrichtung der wenigstens zwei Kommunikationseinrichtungen Datenübertragungen von der ersten und der zweiten Datenport-Schnittstelle an die Speicher-Managementeinheit (70) vorsieht und die andere Kommunikationseinrichtung der wenigstens zwei Kommunikationseinrichtungen Datenübertragungen von der Speicher-Managementeinheit (70) an die erste und die zweite Datenport-Schnittstelle vorsieht,
**dadurch gekennzeichnet, dass**
jede Kommunikationseinrichtung aus einem Satz Kommunikationskanäle (80₁, 80₂) besteht, wobei jeder der Kommunikationskanäle (81, 82, 83) zwischen der ersten Datenport-Schnittstelle, der zweiten Datenport-Schnittstelle und der Speicher-Managementeinheit (70) Daten überträgt und Informationen übermittelt, und
wobei jeder Satz der wenigstens zwei Sätze an Kommunikationskanälen (80₁, 80₂) die drei Kommunikationskanäle (81, 82, 83) umfasst, und
wobei die drei Kommunikationskanäle (81, 82, 83) einen ersten Kanal (81) zum Übertragen von Zellendaten zwischen Datenports (15) der ersten Datenport-Schnittstelle, Datenports (15) der zweiten Datenport-Schnittstelle und dem gemeinsamen Speicher (50), einen zweiten Kanal (82), der mit dem ersten Kanal (81) synchron verbunden ist, zum Übertragen von Nachrichteninformationen, die den Zellendaten auf dem ersten Kanal (81) entsprechen, sowie einen dritten Kanal (83) umfassen, der von den Sätzen Kommunikationskanäle (80₁, 80₂) gemeinsam benutzt wird, jedoch unabhängig von dem ersten (81) und dem zweiten Kanal (82) ist, zum Übertragen von Seitenband-Nachrichteninformationen.

2. Netzwerk-Switch (10) nach Anspruch 1,
wobei wenigstens eine der ersten und zweiten Datenport-Schnittstellen eine Gigabit-Datenport-Schnittstelle ist.

3. Netzwerk-Switch (10) nach Anspruch 1,
wobei die erste Datenport-Schnittstelle, die zweite Datenport-Schnittstelle, die CPU-Schnittstelle, der gemeinsame Speicher (50), die Speicher-Managementeinheit (70) und die wenigstens zwei Sätze Kommunikationskanäle (80₁, 80₂) auf einem einzelnen Chip mit anwendungsspezifischer integrierter Schaltung (ASIC-Chip) integriert sind.

4. Netzwerk-Switch (10) nach Anspruch 1,
wobei die erste Datenport-Schnittstelle, die zweite Datenport-Schnittstelle, die CPU-Schnittstelle, der gemeinsame Speicher, die Speicher-Managementeinheit und die wenigstens zwei Sätze Kommunikationskanäle dafür konfiguriert sind, ein Layer-2-oder Layer-3-Switching mit Wirespeed durchzuführen.

5. Netzwerk-Switch (10) nach Anspruch 1,
wobei die CPU-Schnittstelle dafür konfiguriert ist, zwischen einer entfernten CPU und den wenigstens zwei Sätzen Kommunikationskanälen (80₁, 80₂) Datenübertragungen vorzusehen, wobei die entfernte CPU Operationen der Speicher-Managementeinheit (70) programmieren kann, während eine der ersten und zweiten Datenport-Schnittstellen Daten empfängt oder sendet.

6. Netzwerk-Switch (10) nach Anspruch 6,
wobei die CPU-Schnittstelle dafür konfiguriert ist, zwischen der entfernten CPU und einem Seitenbandkanal (83) der wenigstens zwei Sätze Kommunikationskanäle (80₁, 80₂) Datenübertragungen vorzusehen.

7. Netzwerk-Switch (10) nach Anspruch 1,
wobei der Netzwerk-Switch (10) eine Mehrzahl an halbleiterimplementierten Lookup-Tabellen (Nachschlagetabellen) umfasst, wobei die Mehrzahl an Lookup-Tabellen Adressenauflösungs-Lookup-/Layer-3-Lookup-Tabellen, Regeln-Tabellen (31 a- 31d, 32a-32d) und VLAN-Tabellen (33a-33d) umfasst.

8. Netzwerk-Switch (10) nach Anspruch 7,
wobei die erste Datenport-Schnittstelle an die zweite Datenport-Schnittstelle Tabelleninformationen kommuniziert, so dass eingehende Adresseninformationen an mehreren Datenport-Schnittstellen aktualisiert werden können, während die Informationen an einer Datenport-Schnittstelle empfangen werden.

9. Netzwerk-Switch (10) nach Anspruch 1,
wobei die erste Datenport-Schnittstelle eine Auto-Negotiationseinheit zum Vermitteln einer maximalen Übertragungsgeschwindigkeit zwischen einem Quellen-Datenport (15) und einem Ziel-Datenport (15) umfasst.

10. Netzwerk-Switch (10) nach Anspruch 7,
wobei sich die erste Datenport-Schnittstelle und die zweite Datenport-Schnittstelle eine gemeinsame Addressen-Lookup-/Layer-3-Tabelle und eine gemeinsame VLAN-Tabelle teilen und wobei die erste Datenport-Schnittstelle und die zweite Datenport-Schnittstelle jeweils eine ihnen zugeordnete einzigartige Regeln-Tabelle umfassen.

11. Verfahren zur Handhabung von Datenpaketen in einem Netzwerk-Switch (10),
wobei das Verfahren die Schritte umfasst:
Empfangen eines eingehenden Pakets an einem Datenport (15),
Auflösen einer Zieladresse des eingehenden Datenpakets,
Verwerfen, Übermitteln oder Modifizieren des Pakets basierend auf dem Auflösungsschritt,
Platzieren wenigstens eines Teils des Datenpakets auf einer der wenigstens zwei Kommunikationseinrichtungen, wenn das Paket übermittelt werden soll,
Empfangen eines Abschnitts eines anderen Pakets auf einer anderen der wenigstens zwei Kommunikationseinrichtungen von einem gemeinsamen Speicher an dem Datenport (15), und
Übermitteln des anderen Pakets von dem Datenport,
**dadurch gekennzeichnet, dass**
die Kommunikationseinrichtung aus einem Satz Kommunikationskanäle (80₁, 80₂) besteht,
wobei jeder Satz der wenigstens zwei Sätze Kommunikationskanäle (80₁, 80₂) drei Kommunikationskanäle (81, 82, 83) umfasst, und
wobei die Kommunikationskanäle (81, 82, 83) voneinander getrennt sind,
wobei der Schritt des Platzierens wenigstens eines Teil des Datenpakets auf einem der wenigstens zwei Sätze Kommunikationskanäle (80₁, 80₂) das Platzieren wenigstens eines Teils des Datenpakets auf einem ersten Kommunikationskanal (81) des einen Satzes Kommunikationskanäle (80₁, 80₂) umfasst sowie femer das Platzieren einer zugeordneten Steuernachricht auf einem zweiten Kommunikationskanal (82) des einen Satzes Kommunikationskanäle (80₁, 80₂), und
wobei der Schritt des Empfangens, an dem Datenport, eines Abschnitts eines anderen Datenpakets auf dem anderen der wenigstens zwei Sätze Kommunikationskanäle (80₁, 80₂) das Empfangen, an dem Datenport, eines Abschnitts eines anderen Datenpakets von dem gemeinsamen Speicher (50) auf einem dritten Kommunikationskanal (83), der ein Kanal des anderen der wenigstens zwei Sätze Kommunikationskanäle (80₁, 80₂) ist, und femer das Empfangen einer zugeordneten Steuernachricht von dem gemeinsamen Speicher (50) auf einem vierten Kommunikationskanal umfasst, der ein Kanal des anderen der wenigstens zwei Sätze Kommunikationskanäle (80₁, 80₂) ist, und
wobei der erste, zweite, dritte und vierte Kommunikationskanal (81, 82, 83) voneinander getrennt sind, jedoch der erste und der zweite (81, 82) miteinander synchronisiert sowie der dritte und vierte miteinander synchronisiert sind, und
das Verfahren ferner das Senden und Empfangen, durch den Datenport (15), von Seitenbandnachrichteninformationen auf einem fünften Kommunikationskanal umfasst, der von den Sätzen Kommunikationskanäle (80₁, 80₂) gemeinsam benutzt wird.

12. Verfahren nach Anspruch 11,
wobei der Netzwerk-Switch eine Mehrzahl an Datenports (15) umfasst und wobei der Schritt des Auflösens einer Zieladresse des eingehenden Datenpakets ferner das Aktualisieren von Adresseninformationen umfasst, die beim Übermitteln von Datenpaketen an der Mehrzahl an Datenports (15) verwendet werden, während die Adresseninformationen an einem Datenport (15) der Mehrzahl an Datenports (15) empfangen werden.

## Revendications

1. Commutateur de réseau (10) pour des communications de réseau, ledit commutateur de réseau (10) comprenant :
une première interface de port de données, ladite première interface de port de données supportant au moins un port de données (15) transmettant et recevant des données ;
une seconde interface de port de données, ladite seconde interface de port de données supportant au moins un port de données (15) transmettant et recevant des données ;
une interface d'unité centrale (CPU), ladite interface d'unité centrale étant configurée pour communiquer avec une unité centrale (52) ;
une mémoire commune (50), ladite mémoire commune (50) communiquant avec ladite première interface de port de données et ladite seconde interface de port de données ;
une unité de gestion de mémoire (70), ladite unité de gestion de mémoire (70) servant à la communication de données à partir de ladite première interface de port de données et de ladite seconde interface de port de données et de ladite mémoire commune (50) ; et
au moins deux moyens de communication communiquant des données et des informations de messagerie entre ladite première interface de port de données, ladite seconde interface de port de données et ladite unité de gestion de mémoire (70),
dans lequel un moyen de communication parmi les au moins deux moyens de communication assure la communication à partir de ladite première interface de port de données et de ladite seconde interface de port de données vers ladite unité de gestion de mémoire (70) et un autre moyen de communication parmi les au moins deux moyens de communication assure la communication à partir de ladite unité de gestion de mémoire vers ladite première interface de port de données et ladite seconde interface de port de données, **caractérisé en ce que**
chaque moyen de communication est un jeu de canaux de communication (80₁, 80₂) avec chacun des canaux de communication (81, 82, 83) qui communique des données et des informations de messagerie entre ladite première interface de port de données, ladite seconde interface de port de données et ladite unité de gestion de mémoire (110), et
dans lequel chaque jeu parmi lesdits au moins deux jeux de canaux de communication (80₁, 80₂) comprend trois canaux de communication (81, 82, 83), et dans lequel lesdits trois canaux de communication (81, 82, 83) comprennent un premier canal (81) pour communiquer des données de cellules entre des ports de données (15) de la première interface de port de données, des ports de données (15) de la seconde interface de port de données, et la mémoire commune (50), un deuxième canal (82), verrouillé de manière synchrone avec le premier canal (81), pour communiquer des informations de message correspondant aux données de cellules sur le premier canal (81), et un troisième canal (83), partagé entre les jeux de canaux de communication (80₁, 80₂), indépendant dudit premier canal (81) et dudit second canal (82), pour communiquer des informations de messages de bandes latérales.

2. Commutateur de réseau (10) selon la revendication 1, dans lequel au moins l'une de ladite première interface de port de données et de ladite seconde interface de port de données est une interface de port de données gigabits.

3. Commutateur de réseau (10) selon la revendication 1, dans lequel ladite première interface de port de données, ladite seconde interface de port de données, ladite interface d'unité centrale, ladite mémoire commune (50), ladite unité de gestion de mémoire (70) et lesdits au moins deux jeux de canaux de communication (80₁, 80₂) sont intégrés sur une seule puce ASIC de circuit intégré spécifique à l'application.

4. Commutateur de réseau (10) selon la revendication 1, dans lequel ladite première interface de port de données, ladite seconde interface de port de données, ladite interface d'unité centrale, ladite mémoire commune (50), ladite unité de gestion de mémoire (70) et lesdits au moins deux jeux de canaux de communication (80₁, 80₂) sont configurés pour effectuer la commutation sur la deuxième couche ou sur la troisième couche à la vitesse filaire.

5. Commutateur de réseau (10) selon la revendication 1, dans lequel ladite interface d'unité centrale est configurée pour assurer la communication entre une unité centrale distante et lesdits au moins deux jeux de canaux de communication (80₁, 80₂), dans lequel ladite unité centrale distante peut programmer des opérations de l'unité de gestion de mémoire (70) pendant que l'une de la première interface de port de données et de la seconde interface de port de données reçoit ou transmet des données.

6. Commutateur de réseau (10) selon la revendication 6, dans lequel ladite interface d'unité centrale est configurée pour assurer la communication entre l'unité centrale distante et un canal de bande latérale (83) desdits au moins deux jeux de canaux de communication (80₁, 80₂).

7. Commutateur de réseau (10) selon la revendication 1, ledit commutateur de réseau (10) comprenant une pluralité de tables de recherche mises en oeuvre sur semiconducteurs à l'intérieur de celui-ci, ladite pluralité de tables de recherche comprenant des tables de recherche de résolution d'adresse, de recherche de troisième couche, de règles (31a à 31d, 32a à 32d), et des tables VLAN (33a à 33d).

8. Commutateur de réseau (10) selon la revendication 7 dans lequel ladite première interface de port de données communique des informations de table à ladite seconde interface de port de données, de manière à ce que les informations d'adresses entrantes puissent être actualisées au niveau d'une pluralité d'interfaces de port de données pendant que les informations sont reçues au niveau d'une interface de port de données.

9. Commutateur de réseau (10) selon la revendication 1, dans lequel ladite première interface de port de données comprend une unité d'auto négociation pour négocier une vitesse de communication maximale entre un port de données de source (15) et un port de données de destination (15).

10. Commutateur de réseau (10) selon la revendication 7, dans lequel ladite première interface de port de données et ladite seconde interface de port de données partagent une table commune de recherche d'adresse/troisième couche, et une table commune VLAN, et dans lequel chacune de la première interface de port de données et de la seconde interface de port de données a une table unique de règles qui lui est associée.

11. Procédé de gestion de paquets de données dans un commutateur de réseau (10), ledit procédé comprenant les étapes consistant à :
recevoir un paquet entrant au niveau d'un port de données (15) ;
résoudre une adresse de destination dudit paquet de données entrant ;
abandonner, envoyer ou modifier le paquet sur la base de l'étape de résolution ;
placer au moins une portion dudit paquet de données sur l'un dudit au moins deux moyens de communication, lorsque le paquet doit être envoyé ;
recevoir au niveau dudit port de données (15) une section d'un autre paquet sur un autre dudit au moins deux moyens de communication en provenance d'une mémoire commune ; et
envoyer ledit autre paquet à partir dudit port de données ;
**caractérisé en ce que**
lesdits moyens de communication constituent un jeu de canaux de communication (80₁, 80₂),
dans lequel chaque jeu dudit au moins deux jeux de canaux de communication (80₁, 80₂) comprend trois canaux de communication (81, 82, 83), et
dans lequel lesdits canaux de communication (81, 82, 83) sont séparés l'un de l'autre,
dans lequel ladite étape consistant à placer au moins une portion desdits paquets de données sur l'un desdits au moins deux jeux de canaux de communication (80₁, 80₂) comprend le placement d'au moins une portion desdits paquets de données sur un premier canal de communication (81) dudit jeu de canaux de communication (80₁, 80₂) et comprend en outre le placement d'un message de contrôle associé sur un deuxième canal de communication dudit jeu de canaux de communication (80₁, 80₂), et
ladite étape consistant à recevoir au niveau dudit port de données une section d'un autre paquet de données sur l'autre jeu desdits au moins deux jeux de canaux de communication (80₁ , 80₂) comprend la réception au niveau dudit port de données d'une section d'un autre paquet de données en provenance de la mémoire commune (50) sur un troisième canal de communication (83) qui est un canal de l'autre jeu dudit au moins deux jeux de canaux de communication (80₁ , 80₂) et comprend en outre la réception d'un message de contrôle associé en provenance de la mémoire commune (50) sur un quatrième canal de communication qui est un canal de l'autre jeu desdits au moins deux jeux de canaux de communication (80₁, 80₂), et
dans lequel les premier, deuxième, troisième et quatrième canaux de communication (81, 82, 83) sont séparés mais les premier et deuxième canaux (81, 82) sont synchronisés entre eux et les troisième et quatrième canaux sont synchronisés entre eux, et
comprenant en outre l'envoi et la réception, par ledit port de données (15), des informations de message de bande latérale sur un cinquième canal de communication partagé entre les jeux de canaux de communication (80₁, 80₂).

12. Procédé selon la revendication 11, dans lequel ledit commutateur de réseau a une pluralité de ports de données (15), et dans lequel ladite étape de résolution d'une adresse de destination dudit paquet de données entrant comprend l'actualisation des informations d'adresse utilisées dans l'envoi des paquets de données à ladite pluralité de ports de données (15) pendant que les informations d'adresses sont reçues au niveau d'un port de données (15) de ladite pluralité de ports de données (15).
